# EUROPEAN PATENT APPLICATION

(11) **EP 4 678 612 A1**
(43) Date of publication of application: **14.01.2026**
(21) Application number: 24187413.0
(22) Date of filing: 09.07.2024
(51) Int. Cl.: C04B 7/04, C04B 7/24

(54) **METHOD OF PRODUCING CEMENT CLINKER FROM A RAW MATERIAL COMPRISING A SOURCE OF CALCIUM SULFATE**

(71) Applicant: Holcim Technology Ltd, 6300 Zug (CH)
(72) Inventor: STOFFEL, Beat, 5113 Holderbank (CH); BOES, Karl-Heinz, 5113 Holderbank (CH); SEYLER, Laurent, 5113 Holderbank (CH)
(74) Representative: SONN Patentanwälte GmbH & Co KG

(57) **Abstract**

A method of producing calcium oxide from a raw material comprising a source of calcium sulfate, comprising
- a first step of reducing a first portion of the calcium sulfate in the presence of a reducing agent in a reduction reactor to obtain calcium sulfide, and
- a second step of converting calcium sulfide into calcium oxide by using a second portion of the calcium sulfate, and further comprising subjecting a carbonaceous material to a thermochemical conversion process in a thermochemical conversion reactor for converting the carbonaceous material into a syngas and/or a solid product and using the syngas and/or the solid product as the reducing agent.

## Description

The invention refers to a method of producing calcium oxide and optionally cement clinker from a raw material comprising a source of calcium sulfate.

The production of Portland clinker is traditionally done by preparing a raw meal that comprises limestone and raw clays, and calcining this raw material in a rotary kiln at a temperature of around 1'450°C. During this calcination step, the calcium carbonate in the limestone decarbonates to form carbon dioxide and calcium oxide. Furthermore, the rotary kiln used for the production of Portland clinker is heated by a burner, which produces heat from burning carbon-containing materials, such as fuels and waste materials, which also produces carbon dioxide. These two processes run simultaneously in a Portland clinker manufacturing plant, and produce high amounts of carbon dioxide.

An alternative method of production of Portland clinker that does not require the use of calcium carbonate materials is based on the Müller Kühne (MK) process, wherein a source of calcium sulfates is used as a starting material. In the MK-process calcium sulfate, for example in the form of gypsum, is reduced to calcium sulfide which reacts with calcium sulfate to give sulfur dioxide and calcium oxide, the latter being the main material to obtain cement. The MK-process takes place at temperatures of around 800°C and above, and requires a source of carbon, such as coke, which acts as a reducing agent. The calcium oxide resulting from the MK-process is further processed to obtain cement clinker.

US 2022/0204403 A1 discloses a method of producing cement and co-producing sulfuric acid from phosphogypsum.

EP 728713 B1 discloses a process where calcium sulfate materials are mixed with reactive carbon, and calcined at a first temperature of over 700°C so as to obtain calcium oxide, and the calcium oxide is then calcined at a temperature of over 1200°C in the presence of silica, alumina and iron oxide to obtain clinker. The SO₂ containing flue gas is then treated to be converted to SO₃ to produce sulfuric acid.

DE 19625538 B4 discloses a method of producing Portland cement and sulfuric acid by the MK-process, wherein waste gypsum board and other gypsum rubble are used as a source of calcium sulfate. The waste gypsum boards are pre-reduced to a uniform mill-processable edge length, sorted and freed from foreign materials such as wood, steel and plastic pieces, ground to powder fineness under throttled air suction, mixed with other cement starting material powder components and, after optional intermediate storage, processed in the rotary kiln to form cement clinker.

However, a significant drawback of the Müller-Kühne process lies in the use of reducing agents, which are typically carbon-based. During the reduction step, the carbon-based reducing agents react with the calcium sulfate, resulting in the generation of carbon dioxide (CO₂) as a byproduct. This CO₂ contributes to the overall carbon footprint of the production process, undermining efforts to mitigate the environmental impact of the industry.

Therefore, the present invention aims at improving a method of producing cement clinker from a source of calcium sulfate by further reducing the carbon footprint.

In order to solve this and other objects, the invention provides a method of producing calcium oxide from a raw material comprising a source of calcium sulfate, comprising:
- a first step of reducing a first portion of the calcium sulfate in the presence of a reducing agent in a reduction reactor to obtain calcium sulfide,
- a second step of converting calcium sulfide into calcium oxide by using a second portion of the calcium sulfate,
and further comprising subjecting a carbonaceous material to a thermochemical conversion process in a thermochemical conversion reactor for converting the carbonaceous material into a syngas and/or a solid product and using the syngas and/or the solid product as the reducing agent.

Thus, the invention is based on the idea to use a thermochemical conversion process to allow the production of reducing agents derived from carbonaceous materials, such as biomass and waste, in a process for producing calcium oxide and optionally cement clinker, instead of conventional fossil-based reducing agents like coal or coke.

The thermochemical conversion process of the present invention allows for the transformation of readily available and often underutilized carbonaceous materials into valuable reducing agents. By employing reducing agents derived from biomass and waste materials, the method significantly reduces the reliance on fossil-based reducing agents, such as coal and coke, thereby minimizing the CO₂ footprint associated with the calcium oxide or cement clinker production process.

Moreover, the utilization of carbonaceous waste materials, such as municipal waste and plastics, as feedstock for the thermochemical conversion process provides an environmentally friendly solution for waste management. The method of the present invention not only diverts these waste materials from landfills but also converts them into useful reducing agents, contributing to a circular economy and reducing the overall environmental impact of calcium oxide and cement production.

The syngas and/or solid product obtained from the thermochemical conversion process possesses suitable reducing properties, enabling their effective use as reducing agents in the reducing step of the invention. The syngas, which typically comprises hydrogen and carbon monoxide, can be directly used as a gaseous reducing agent, while the solid product, such as biochar, bio-coal, charcoal or ash, can be employed as a solid reducing agent.

Preferably, the calcium oxide obtained from the second step may be used in a third step of calcining the calcium oxide in the presence of silica, alumina, and iron oxide containing materials to obtain cement clinker. Preferably, the third step is carried out in a clinkerization reactor.

The thermochemical conversion reactor used in the invention is an installation that is separate from the reduction reactor and the optional clinkerization reactor.

The thermochemical conversion process can preferably be a gasification process, a pyrolysis process or a torrefaction process.

Gasification is a thermochemical conversion process that involves the partial oxidation of carbonaceous materials at elevated temperatures, typically ranging from 700°C to 1'500°C, in the presence of a controlled amount of oxidizing agent, such as air, oxygen, or steam. The oxygen stoichiometry in the gasification process is regulated to maintain an oxygen-deficient environment, with the oxygen supply being less than the stoichiometric requirement for complete combustion. This controlled oxygen environment promotes the production of a syngas rich in hydrogen (H₂) and carbon monoxide (CO), while minimizing the formation of carbon dioxide (CO₂) and water vapor (H₂O). The high temperature and controlled oxidation conditions in the gasification process ensure the efficient conversion of the carbonaceous material into a syngas with a high reducing potential.

Pyrolysis involves the thermal decomposition of carbonaceous materials in the absence of oxygen, typically at temperatures ranging from 400°C to 800°C. The syngas obtained from pyrolysis comprises mainly H₂, CO, and CO₂, while the biochar is a carbon-rich solid residue with a high surface area and porous structure.

Torrefaction is a mild thermochemical conversion process that operates at lower temperatures compared to gasification and pyrolysis, typically ranging from 200°C to 300°C. During the torrefaction process, the carbonaceous material undergoes partial thermal decomposition in an oxygen-free environment that prevents the oxidation of the carbonaceous material and promotes the formation of a solid product known as torrefied biomass or biocoal. Torrefaction enhances the fuel properties of the carbonaceous material by increasing its energy density, reducing its moisture content, and improving its grindability.

The composition of the syngas from the thermochemical conversion reactor depends on the biomass feedstock, in particular the elementary composition (C,H,O,N,S) and the moisture and ash content, as well as on the type of thermochemical conversion process used. The syngas preferably contains 20-60 vol.-% carbon monoxide (CO), 20-35 vol.-% hydrogen (H2), up to 10% methane (CH₄), and 5-15% carbon dioxide (CO₂) and up to 20% of water vapor. Additionally larger size hydrocarbons can be formed.

Preferably, the carbonaceous material is of biogenic origin, such as biomass. Biomass is a renewable and carbon-neutral resource that encompasses a wide range of organic materials derived from living organisms, such as plants, trees, and agricultural residues. One of the technical effects of using biomass as a carbonaceous material is its inherent carbon neutrality. During the growth phase, biomass absorbs carbon dioxide (CO₂) from the atmosphere through photosynthesis. When biomass is subjected to the thermochemical conversion process, such as gasification or pyrolysis, and the syngas obtained thereby is subsequently used as a reducing agent to reduce calcium sulfate, the carbon stored in the biomass is released as CO₂. However, this released CO₂ is considered biogenic and does not contribute to the net increase in atmospheric CO₂ levels. In contrast, the use of fossil-based reducing agents releases previously sequestered carbon, resulting in a net increase in atmospheric CO₂ concentrations.

Another benefit of using biomass as a carbonaceous material is its widespread availability and diversity. Biomass resources can be sourced from various sectors, including forestry, agriculture, and waste management. Agricultural residues, such as straw, husks, and bagasse, are often considered waste materials and can be effectively valorized as feedstock for producing reducing agents. Similarly, forestry residues, such as wood chips and sawdust, can be utilized as biomass sources.

In order to make the carbonaceous material suitable for being treated in the thermochemical conversion reactor, the material can be pre-treated, such as by sieving, comminution, and drying.

In a preferred embodiment of the present invention, thermal energy is provided to the first step, the second step and/or the third step by combusting the syngas and/or the solid product produced in the thermochemical conversion reactor. Preferably, the syngas and/or the solid product produced in the thermochemical conversion reactor is utilized as a fuel source to at least partially heat the reduction reactor and/or the clinkerization reactor and/or the thermochemical conversion reactor itself. Using syngas and/or the solid product as a fuel source results in the reduction of external energy inputs required for the calcium oxide and cement clinker production process. Conventionally, the reduction reactor and clinkerization reactor are heated using fossil fuels, such as coal or natural gas. However, by combusting the syngas and/or the solid product produced in-situ, the process becomes more self-sufficient in terms of energy supply. The heat generated from combustion of syngas and/or the solid product can partially or fully substitute the need for external fossil fuels, thereby reducing the overall energy costs and dependence on non-renewable energy sources. Further, the combustion of syngas and/or the solid product within the reactors allows for direct heat integration, minimizing heat losses associated with external heat transfer.

The use of syngas and/or solid product as a fuel in the first step, the second step and/or the third step also offers operational flexibility and process control benefits. The fuel production rate from the thermochemical conversion reactor can be adjusted based on the thermal energy requirements of the process. During periods of high energy demand, the fuel production can be increased to meet the additional heating needs. Conversely, during periods of low energy demand, the fuel production can be reduced, minimizing energy waste and optimizing resource utilization.

The syngas may also be used to dry the biomass upstream from the thermochemical conversion reactor or to dry other material streams for the clinker production process.

The syngas may also be used to produce steam which can be used in a sulfuric acid plant to produce sulfuric acid from the sulfur oxides emitted in the reduction reactor and/or the clinkerization reactor.

The solid product from the thermochemical conversion reactor can be either directly fed to the calcium oxide production system or optionally, if the material is too coarse, it can be transported to a grinding system to be ground to a fineness of 2-20% residue on a 90 µm sieve before it is added to the clinker production system. Adding the solid product from the thermochemical conversion reactor to the calcium oxide or clinker production system may be carried out in different ways. The solid product may be fed into the reduction reactor and/or the clinkerization reactor. When fed into the reduction reactor, the solid product can preferably be in a mixture with the raw material. Optionally, a mixing device can be used to enhance the mixing of the solid product with the raw material before it enters the reduction reactor. The solid product, such as biochar or torrefied biomass, obtained from the thermochemical conversion of carbonaceous materials, possesses good reducing properties. When the solid product is fed into the reduction reactor, it acts as a reducing agent, either alone or in combination with syngas as an additional reducing agent. Feeding the solid product into the reduction reactor in a mixture with the raw material ensures a homogeneous distribution of the reducing agent throughout the reactor bed. This uniform distribution facilitates efficient contact between the reducing agent and the calcium sulfate, leading to improved reduction kinetics and higher conversion rates.

When used in the second step, the solid product can preferably be in a mixture with the calcium sulfide and/or the second portion of the calcium sulfate. Optionally, a mixing device can be used to enhance the mixing of the solid product with the calcium sulfide and/or the second portion of the calcium sulfate before it is used in the second step. The solid product acts as a supplementary fuel and possibly as a reducing agent in the second step and/or in the third step. The high temperature and oxidizing atmosphere in the clinkerization reactor promote the combustion of the solid product, releasing additional thermal energy that contributes to the overall heat balance of the process. The combustion of the solid product also generates a localized reducing atmosphere, which assists in the desulfurization of calcium sulfate and calcium sulfide mixture to obtain calcium oxide.

Preferably, a solid product outlet of the thermochemical conversion reactor may be positioned to be directed to the inlet of the clinkerization reactor so that the solid product falls into the reactor if used as fuel. Else if the solid product is to be used as reducing agent, it can be extracted from the thermochemical conversion reactor located at ground floor and be sent to the pretreatment and dosing assets.

In addition to the syngas and/or the solid product also other energy carriers can be added to the process for producing calcium oxide or clinker. Such energy carriers can comprise hydrogen or biomass or electrical energy or any other type of gaseous, liquid and solid fuel. Such fuels can be added either to the reduction reactor or to the clinkerization reactor or to both.

When using hydrogen as an additional fuel in the second step, the combustion product is steam, which can be used in a sulfuric acid plant to produce sulfuric acid from the sulfur oxides emitted in the reduction reactor and/or from the second step.

With regard to the chemical reactions taking place in the first step of the invention (in the reduction reactor) and in the second step of the invention, the following is noted.

When syngas (Co+H₂) is used as a reducing agent in the reduction reactor, the following primary reactions are occurring for converting calcium sulfate to calcium sulfide:
Reduction of calcium sulfate by carbon monoxide (CO):

CaSO₄ + 4CO → CaS + 4CO₂

In this reaction, carbon monoxide (CO) from the syngas reduces calcium sulfate (CaSO₄) to calcium sulfide (CaS).

Reduction of calcium sulfate by hydrogen (H₂) :

CaSO₄ + 4H₂ → CaS + 4H₂O

In this reaction, hydrogen (H₂) from the syngas reduces calcium sulfate (CaSO₄) to calcium sulfide (CaS).

A water-gas shift reaction and a Boudouard reaction may be taking place as secondary reactions.

When the solid product obtained from the thermochemical conversion process is used as a reducing agent in the reduction reactor, the following primary reactions are occurring for converting calcium sulfate to calcium sulfide:
Reduction of calcium sulfate by solid carbon:

CaSO₄ + 2C → CaS + 2CO₂

In this reaction, the solid carbon (C) from the solid product directly reduces calcium sulfate (CaSO₄) to calcium sulfide (CaS).

In addition, a Boudouard reaction is taking place, wherein solid carbon reacts with carbon dioxide to produce carbon monoxide (CO). The carbon monoxide generated can then participate in the reduction of calcium sulfate:

CaSO₄ + 4CO → CaS + 4CO₂

According to the invention, a first partial amount (for example 12-44 wt.-%, preferably 20-35 wt.-%) of the calcium sulfate is converted to calcium sulfide in the first step. The second amount of calcium sulfate contained in the raw material is used in the second step to convert the calcium sulfide obtained in the first step to calcium oxide and sulfur dioxide according to the following reaction:

CaS + 3 CaSO₄ --> 4 CaO + 4 SO₂

Preferably, a mass fraction of the calcium sulfate of 0.05 to 0.8, more preferably 0.1 to 0.4 reacts to calcium sulfide in the first step and the second amount, which may be the remaining fraction, is used in the second step.

The second amount of the calcium sulfate preferably corresponds to the fraction of calcium sulfate that remains unreacted when it is withdrawn from the reduction reactor. Alternatively, only the first amount of the calcium sulfate is subjected to the first step and the second amount is fed to the second step without passing through the reduction reactor.

The oxygen added to the clinkerization reactor for combusting the fuel may be added in the form of pure O₂ or air, or a mixture of O₂ and air.

The third step comprises calcining the calcium oxide in the presence of silica, alumina, and iron oxide containing materials to obtain cement clinker. Silica, alumina and iron oxide are required to be present in the clinkerization reactor, because they react with calcium oxide and form clinker minerals, in particular alite (Ca3SiOS), belite (Ca2SiO4), tricalcium aluminate (Ca3Al2O6), and tetracalcium aluminoferrite (Ca4A12Fe2O10). These corrective materials can be added to the raw material that is fed into the reduction reactor and/or added to the reduction reactor added to the material stream that is transferred from the reduction reactor to the clinkerization reactor.

By carrying out the transformation of a calcium sulfate source into cement clinker in a three-step process, and to conduct the first step and the second step in a separate reactor, each step may be optimized with respect to its process conditions, including atmosphere and temperature. The second and the third step may be carried out in the same reactor, such as the clinkerization reactor. The process conditions in the reduction reactor can be adjusted to the requirements of the corresponding chemical reactions, such as lower temperature and a reducing atmosphere. In contrast, the second step requires a higher temperature and an oxidizing atmosphere. Since an optimal temperature may be adjusted for each of the first and second steps, the energy efficiency of the overall process is increased.

Preferably, the first step is carried out at a temperature of 600-1100°C and the second step is carried out at a temperature of 1000-1450°C. The first step may preferentially be carried out at a temperature of 700-950°C.

The first and the second steps are preferably carried out consecutively, without the temperature of the material feed withdrawn from the reduction reactor getting lower than 600-1100°C before the second step occurs. The two steps may alternatively also be separated in two locations. In that case the material feed withdrawn from the reduction reactor at the first location would need to be cooled down and transported to the second location.

It is desirable to transform the entire amount of calcium sulfate into calcium oxide, in order to avoid any uncontrolled amounts of calcium sulfate in the cement clinker or any uncontrolled process upset conditions like ring formation etc, which would affect the properties of the final product. Therefore, it is preferable to provide the correct ratio of calcium sulfide to calcium sulfate in the clinkerization reactor.

Preferably, a ratio of calcium sulfide and the second portion of the calcium sulfate present in the clinkerization reactor is adjusted by controlling the reduction process taking place in the reduction reactor, said controlling preferably comprising at least one of adjusting the amount of reducing agent used in the reduction reactor, adjusting the temperature in the reduction reactor and/or adjusting the residence time of the raw material in the reduction reactor.

The step of controlling the reduction process and/or clinkerization step can comprise measuring characteristics of the materials, such as SO3 content, calcium sulfide content, or clinker mineralogy. These measurements can be done routinely by XRD analysis or, e.g., spectroscopy, either by taking samples at specific time intervals, e.g. every 20 minutes, or using online measurement systems.

Preferably, additional measurements of calcium sulfate and calcium sulfide are carried out on materials as they exit the reduction reactor to best control the entire process. Based on these measurements, the amount of reducing agent injected into the reduction reactor, the residence time of the materials in the reduction reactor and/or the temperature within the reactor can be adjusted and optimized.

The composition of off-gases withdrawn from the reduction reactor can also be analyzed, including determining at least one of the content of carbon monoxide, the content of sulfur dioxide, the content of hydrogen sulfide, the content of oxygen and the step of controlling the reduction process is carried out as a function of said composition.

Preferably, steam is generated in the first step and withdrawn from the reduction reactor, wherein sensible heat is removed from the steam by means of a heat exchanger and used to preheat the hydrogen used as a reducing agent, and/or to preheat and dry the raw material prior to the first step.

Heating the reduction reactor and/or the clinkerization reactor may at least partly also be accomplished by electrical energy and/or by combusting biomass and/or hydrogen and7or syngas.

Various sources of calcium sulfate may be used as a starting material for the first step. In particular, the source of calcium sulfate may be gypsum, hemihydrate, waste calcium sulfate and/or phosphogypsum, the latter being widely available as it is most often landfilled in large quantities, being a by-product of the production of phosphate-based fertilizers or phosphoric acid.

In order to maximize the surface to volume ratio of the calcium sulfate source, thereby increasing the efficiency of the reaction between the calcium sulfate source and the reducing agent during the first step, the source of calcium sulfate is preferably provided in the form of a powder, preferably having a maximum particle size of 300 µm. Herein, the particle size is measured by sieving.

Considering that some sources of calcium sulfate have a high content of free water, a preferred embodiment of the invention provides that the source of calcium sulfate is dried (dehydrated) to a water content of < 2 wt.-%, preferably less < 1 wt.-%, before being introduced into the reduction reactor.

Preferably, the sulfur dioxide obtained in the second step is withdrawn from the clinkerization reactor and used to produce sulfuric acid.

In particular, steam that is generated in the first step and withdrawn from the reduction reactor can advantageously be used to produce sulfuric acid from the sulfur dioxide.

In a preferred embodiment, the silica, alumina, and iron oxide containing materials comprise recycled or waste materials. In a preferred embodiment, the silica, alumina, and iron oxide containing materials comprise at least 40 wt.-% of recycled or waste materials.

The recycled or waste materials can be selected from any of the following materials: mineral waste materials from construction and demolition such as concrete demolition waste, recycled aggregates, recycled bricks, coal ashes, or steel slags. The use of waste and recycled materials decreases the environmental impact of this production process, by minimizing the need to use virgin materials.

Preferably, a heat exchanger is used in order to withdraw heat from the waste gas stream, the sulfur dioxide and/or the cement clinker, wherein the heat is preferably used to dry the source of calcium sulfate or the raw material mixture.

As mentioned above, the invention provides a two-step process, wherein the first and the second step are carried out in two different and separate reactors. Preferably, a cement raw meal precalciner equipment or decomposition reactor, situated below or being integrated into a preheater tower of a cement manufacturing plant operating according to the dry process, is used as the reduction reactor. This allows to use existing cement manufacturing plants for conducting the method of the invention. A fluidized bed reactor, packed bed reactor, a fixed bed reactor or a rotary kiln may be used as the reduction reactor. A rotary kiln is preferred if a solid reducing agent, such as biomass and biochar is used in the first step.

The clinkerization reactor may preferably be designed as a rotary kiln. In particular, an existing rotary calcination kiln of a cement manufacturing plant may be used.

In a preferred embodiment of the present invention, the cement clinker is discharged from the clinkerization reactor and fed through a clinker cooler, in which the cement clinker is cooled in contact with cooling air, wherein heated cooling air is withdrawn from the clinker cooler and used in the thermochemical conversion reactor. In this way, the heated cooling air serves as a valuable source of thermal energy for the thermochemical conversion process. The sensible heat recovered from the hot cement clinker, which would otherwise be lost to the environment, is effectively utilized in the thermochemical conversion reactor. Preferably, the heated cooling air withdrawn from the clinker cooler is first dedusted by a cyclone before it enters the thermochemical conversion reactor. The amount of gas is controlled by a fan speed after the thermochemical conversion reactor which supplies the gas to the main burner of the clinkerization reactor.

According to another preferred embodiment of the invention, off-gases generated in the first step are withdrawn from the reduction reactor, wherein sensible heat is removed from the off-gasses by means of a heat exchanger and used to dry the raw material prior to the first step and/or to dry the carbonaceous material prior to the thermochemical conversion process. These off-gasses, which in some cases contain carbon dioxide (CO2), carbon monoxide (CO), and other gaseous compounds, carry a significant amount of sensible heat due to the high temperatures prevailing in the reduction reactor. Instead of directly releasing these off-gasses to the environment, the embodiment employs a heat exchanger to recover the sensible heat from the off-gasses and utilize it in other stages of the process. The raw material requires drying to remove moisture and improve its reactivity in the subsequent steps. Similarly, the carbonaceous material, such as biomass or waste materials, often contains moisture that needs to be removed prior to the thermochemical conversion process to enhance the efficiency and product quality.

By utilizing the sensible heat recovered from the off-gasses to dry the raw material and/or the carbonaceous material, the energy requirements for the subsequent reduction step in the reduction reactor and for the thermochemical conversion process, respectively, are greatly reduced.

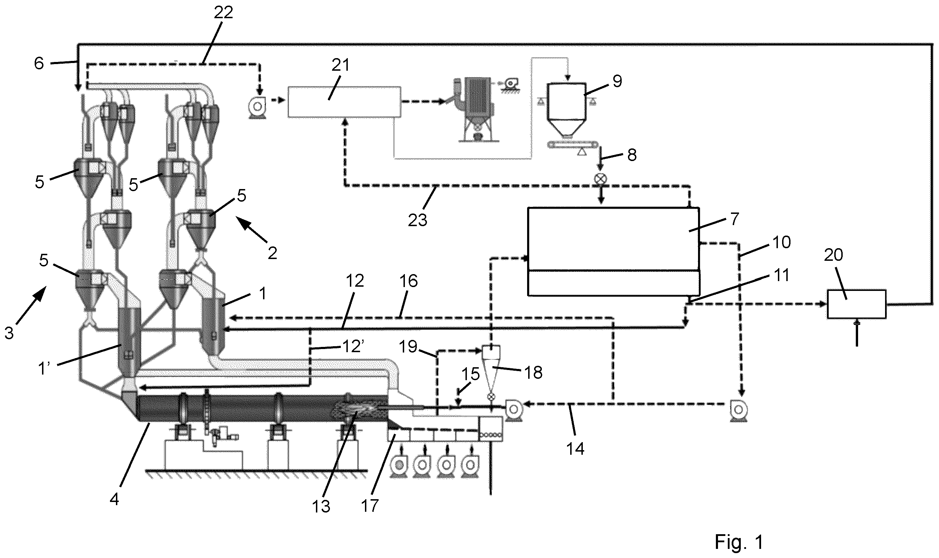

The invention will now be described by means of an exemplary embodiment illustrated in Fig. 1. Fig. 1 shows a cement manufacturing plant that has been adapted to carry out the method of the instant invention. In this embodiment, a reduction reactor 1 is connected to a preheater string 2 of a preheater tower 3, while the rotary kiln functions as the clinkerization reactor 4.

The cement manufacturing plant comprises a preheater tower 3 with a series of cyclone stages 5, where the raw material 6 is preheated by the hot gasses from the reduction reactor 1 and the clinkerization reactor 4. The preheated raw material then enters the reduction reactor 1 where the calcium sulfate (CaSO₄) in the raw material is reduced to calcium sulfide (CaS) in the presence of a reducing agent, such as a solid product from the thermochemical conversion unit 7, hydrogen and/or another reducing agent.

The thermochemical conversion unit 7 is installed as a separate unit, operating independently from the reduction reactor 1 and the clinkerization reactor 4. The thermochemical conversion unit 7 processes carbonaceous feedstock 8, such as biomass, waste materials, or other organic residues, stored in a silo 9 to produce syngas 10 and a solid product 11, such as biochar or torrefied biomass.

The solid product 11 generated in the thermochemical conversion unit 1 is transported to the reduction reactor 1 through a dedicated line 12, as shown in Fig. 1. The solid product 11 is optionally introduced into the reduction reactor 1 as a fuel and/or a reducing agent, facilitating the reduction of calcium sulfate to calcium sulfide. The optional combustion of the solid product 11 in the reduction reactor 1 provides the necessary heat and/or reducing atmosphere for the reduction reaction to occur efficiently. Optionally, a partial amount of the solid product may be fed to the second reduction reactor 1' via the line 12', the second reduction reactor 1' being connected to the second preheater string of the preheater tower 3.

The syngas 10 produced in the thermochemical conversion unit 7 is directed to the main burner 13 of the clinkerization reactor 4 through a separate gas line 14, wherein an optional addition of hydrogen can be provided, as shown by reference numeral 15. The syngas 10, which is a mixture of carbon monoxide (CO) and hydrogen (H₂), serves as a fuel for the main burner 13, providing the energy required for the clinkerization process in the clinkerization reactor 4. A partial amount of syngas may also be fed into the reduction reactor 1 via the optional line 16 and used as a fuel.

In the clinkerization reactor 4, the calcium sulfide formed in the reduction reactor 1 reacts with a second portion of calcium sulfate to produce calcium oxide (CaO) and sulfur dioxide (SO₂). The high temperature in the clinkerization reactor 4, typically ranging from 1400°C to 1500°C, provides the necessary conditions for the clinkerization reaction to occur. The resulting calcium oxide combines with other components, such as silica, alumina, and iron oxide, to form the desired clinker phases.

The hot clinker exiting the clinkerization reactor 4 is then cooled in a clinker cooler 17, where it is brought into contact with cooling air. The sensible heat from the hot clinker is transferred to the cooling air, which can be further utilized in the thermochemical conversion unit 7 or other parts of the process for heat recovery and energy efficiency. A cyclone separator 18 is provided in line 19 connecting the clinker cooler 17 with the thermochemical conversion unit 7 for dedusting the clinker cooler off-gas.

As shown in Fig. 1, the solid product 11 from the thermochemical conversion unit 7 may optionally be added to the raw material in a raw material mixer 20, from where the mixture is transported to the raw material inlet of the preheater tower 3.

Further, carbonaceous feedstock 8 may be dried in a dryer 21, which can be operated by preheater off-gas 22 and/or waste gas 23 from the thermochemical conversion unit 7.

## Claims

1. A method of producing calcium oxide from a raw material comprising a source of calcium sulfate, comprising
- a first step of reducing a first portion of the calcium sulfate in the presence of a reducing agent in a reduction reactor to obtain calcium sulfide, and
- a second step of converting calcium sulfide into calcium oxide by using a second portion of the calcium sulfate,
and further comprising subjecting a carbonaceous material to a thermochemical conversion process in a thermochemical conversion reactor for converting the carbonaceous material into a syngas and/or a solid product and using the syngas and/or the solid product as the reducing agent.

2. The method according to claim 1, further comprising a third step of calcining the calcium oxide in the presence of silica, alumina, and iron oxide containing materials to obtain cement clinker.

3. The method according to claim 2, wherein the third step is carried out in a clinkerization reactor.

4. The method according to claim 1, 2 or 3, wherein the thermochemical conversion process is a gasification process, a pyrolysis process or a torrefaction process.

5. The method according to any one of claims 1 to 4, wherein the solid product is bio-coal or biochar.

6. The method according to any one of claims 1 to 5, wherein
- the solid product is fed into the reduction reactor, preferably being in a mixture with the raw material, and/or
- the solid product is added to the second step, preferably being in a mixture with the calcium sulfide and/or the second portion of the calcium sulfate, and/or
- the solid product is added to the third step.

7. The method according to any one of claims 1 to 6, wherein the first step is carried out at a temperature of 600-1100°C and the second step is carried out at a temperature of 1000-1450°C.

8. The method according to any one of claims 1 to 7, wherein the source of calcium sulfate is gypsum, hemihydrate, waste calcium sulfate and/or phosphogypsum.

9. The method according to any one of claims 1 to 8, wherein thermal energy is provided to the first step, the second step and/or the third step by combusting the syngas and/or the solid product produced in the thermochemical conversion reactor.

10. The method according to claim 9, wherein the reduction reactor and/or the clinkerization reactor and/or the thermochemical conversion reactor is at least partially heated by combusting the syngas and/or the solid product produced in the thermochemical conversion reactor.

11. The method according to any one of claims 1 to 10, wherein thermal energy is provided to the first step, the second step and/or the third step by means of electrical heating.

12. The method according to claim 11, wherein the reduction reactor and/or the clinkerization reactor is at least partially heated by electrical energy.

13. The method according to any one of claims 3 to 12, wherein the cement clinker is discharged from the clinkerization reactor and fed through a clinker cooler, in which the cement clinker is cooled in contact with cooling air, wherein heated cooling air is withdrawn from the clinker cooler and used in the thermochemical conversion reactor.

14. The method according to any one of claims 1 to 13, wherein off-gasses generated in the first step are withdrawn from the reduction reactor, wherein sensible heat is removed from the off-gasses by means of a heat exchanger and used to dry the raw material prior to the first step and/or to dry the carbonaceous material prior to the thermochemical conversion process.

15. The method according to any one of claims 3 to 14, wherein the clinkerization reactor is designed as a rotary kiln.

16. The method according to any one of claims 1 to 15, wherein the reduction reactor is designed as a fluidized bed reactor, a packed bed reactor, a fixed bed reactor, or a rotary kiln.

17. The method according to any one of claims 1 to 16, wherein sulfur dioxide obtained in the first and/or second step is withdrawn and used to produce sulfuric acid.

18. The method according to claim 17, wherein steam is generated in the first step and withdrawn from the reduction reactor and used to produce sulfuric acid from the sulfur dioxide.

19. The method according to any one of claims 1 to 18, wherein the first step and the second step are carried out together in one reactor,

20. The method according to any one of claims 2 to 18, wherein the second step and the third step are carried out together in one reactor.

21. The method according to any one of claims 2 to 20, wherein the first step, the second step and the third step are carried out together in one reactor.

22. The method according to any one of claims 2 to 21, wherein the silica, alumina and iron oxide containing materials comprise recycled or waste materials.

23. The method according to claim 22, wherein the recycled or waste materials are selected from any of the following materials: mineral waste materials from construction and demolition such as concrete demolition waste, recycled aggregates, recycled bricks, coal ashes, steel slags, or other slags from metallurgic processes.

24. The method according to any one of claims 1 to 23, wherein a heat exchanger is used in order to withdraw heat from off-gasses generated in the first step, the sulfur dioxide generated in the first and/or second step, and/or the calcium oxide, wherein the heat is preferably used to dry the raw material.
